## Europäisches Patentamt
## European Patent Office
## Office européen des brevets

(11) Veröffentlichungsnummer: **0 001 272**
**B1**

(12) # EUROPÄISCHE PATENTSCHRIFT

(45) Veröffentlichungstag der Patentschrift:
**07.01.81**

(21) Anmeldenummer: **78100909.7**

(22) Anmeldetag: **18.09.78**

(51) Int. Cl.³: **F 24 D 11/02, F 25 B 29/00**

(54) Heizungsanlage mit Wärmepumpe.

(30) Priorität: **24.09.77 DE 2743508**

(43) Veröffentlichungstag der Anmeldung:
**04.04.79 Patentblatt 79/7**

(45) Bekanntmachung des Hinweises auf die Patenterteilung:
**07.01.81 Patentblatt 81/1**

(84) Benannte Vertragsstaaten:
**BE CH FR GB SE**

(56) Entgegenhaltungen:
**CH-A-471 353**
**DE-A-2 528 736**
**DE-A-2 543 569**
**DE-A-2 552 538**
**DE-A-2 613 506**
**DE-A-2 620 395**
**DE-A-2 633 389**
**DE-A-2 647 216**
**US-A-2 309 165**
**US-A-3 157 227**
**US-A-4 037 649**

(73) Patentinhaber: **Deutsche Forschungs -und Versuchsanstalt für Luft-und Raumfahrt e.V., Linder Höhe, D-5000 Köln 90 (DE)**

(72) Erfinder: **Buschulte, Winfried, Prof. Dr.-Ing., Hustedter Weg 31, D-3100 Celle 11 (DE)**

(74) Vertreter: **Gralfs, Harro, Dipl.-Ing. et al, Am Bürgerpark 8, D-3300 Braunschweig (DE)**

ACTORUM AG.

Heizungsanlage mit Wärmepumpe

Die Erfindung betrifft eine Heizungsanlage mit einem Brenner für flüssige oder gasförmige Brennstoffe in Kombination mit einer Wärmepumpe, deren abzugebende Wärme über Wärmetauscher dem Rücklauf der Heizung zugeführt wird, und bei dem das Kältemittel in einem Wärmetauscher durch das Abgas des Brenners aufgeheizt wird.

Es ist bekannt, den Kältemittelkreis der Wärmepumpe durch Medien mit niedrigem Temperaturniveau aufzuheizen, beispielsweise durch im Erdboden oder in Gewässern enthaltene Wärme. Es ist weiter bekannt, das Kältemittel durch Luft aufzuheizen, wobei diese Luft die normale Umgebungsluft sein kann, oder aber auch aufgeheizte Abluft aus Heiz- oder Kühlsystemen.

Bei einer bekannten Heizungsanlage der gattungsgemässen Art werden die Abgase eines Ölbrenners über einen Wärmeaustauscher geführt, in dem das Kältemittel der Wärmepumpe durch das Abgas aufgeheizt wird (US-PS 4 037 649). Bei Heizungsanlagen ist es üblich, die Abgase durch einen Schornstein abzuführen. Dabei ist es notwendig, dass die Abgase mit einer bestimmten Temperatur in den Schornstein eintreten, damit eine Kondensation der Abgase im Schornstein vermieden wird. Über den Schornstein werden dabei alle Bestandteile des Abgases in die Atmosphäre abgelassen. Zu diesen Bestandteilen gehören auch die Schwefeloxyde, die bei Heizölen zwangsläufig anfallen und in hohem Masse umweltschädlich sind.

Aufgabe der Erfindung ist es, eine Heizungsanlage zu schaffen, bei der keine Schwefelverbindungen in die Luft gelangen.

Diese Aufgabe wird gemäss der Erfindung dadurch gelöst, dass der Wärmetauscher so ausgelegt ist, dass das Abgas bis auf Umgebungstemperatur abgekühlt wird, und dass Mittel zum Auffangen des sich dabei auf den Wärmeaustauscherflächen niederschlagenden Kondensats vorgesehen sind.

In dem sich auf den Wärmeaustauscherflächen niederschlagenden Kondensat sind die bei der Verbrennung entstandenen Schwefeloxyde als schweflige Säure gelöst. Das Kondensat kann nach dem Niederschlag durch basische Zusätze neutralisiert werden, so dass das Kondensat anschliessend in die Abwasserleitungen abgeleitet werden kann. Da Abwässer ohnehin in vielen Fällen basisch sind, kann das Kondensat bei Vorliegen entsprechender Voraussetzungen auch ohne zusätzliche Neutralisierung in die Abwassersysteme abgelassen werden. Neben der Reinigung der Abgase ist es möglich, den vollen Wärmeinhalt der Kesselabgase, die den Kessel mit Temperaturen von 200 °C bis 300 °C verlassen, nutzbar zu machen. Bei einer Abkühlung der Abgase bis auf Umgebungstemperatur kann auf einen Schornstein verzichtet werden. Die Abgase können dann, wie bereits bei gasbefeuerten Heizungsthermen, direkt durch Mauerbrüche ins Freie geleitet werden.

Die Heizungsanlage gemäss der Erfindung kann mit bekannten Heizsystemen kombiniert werden, bei denen das Kältemittel durch Medien mit niedrigem Temperaturniveau aufgeheizt wird. Die Wärmepumpe kann als an sich bekannte Absorberwärmepumpe ausgebildet sein, deren Absorber im Rücklauf der Heizung liegt und deren Kocher vom Heizungsbrenner beheizt wird.

Die Wärmepumpe kann aber auch in an sich bekannter Weise mit einem motorisch angetriebenen Verdichter versehen sein. Erfindungsgemäss ist dabei als Antrieb des Verdichters vorzugsweise ein dampfbetriebener Antrieb vorgesehen, dessen Abdampf in den Rücklauf der Heizung eingeleitet wird. Als Dampferzeuger ist dabei vorzugsweise ein durch die Brenngase des Brenners beaufschlagter Verdampfer vorgesehen, in den Wasser aus dem Vorlauf des Heizkessels zum Verdampfen eingespeist wird.

Als Antrieb für den Verdichter kann eine Dampfturbine vorgesehen sein. Es ist aber auch möglich, als Antrieb des Verdichters eine Kolbendampfmaschine vorzusehen.

Die Erfindung ist in der Zeichnung an zwei Ausführungsbeispielen veranschaulicht und im nachstehenden im einzelnen anhand der Zeichnung beschrieben.

Fig. 1 zeigt ein Systemschaubild einer erfindungsgemässen Heizungsanlage mit einer Absorber-Wärmepumpe.

Fig. 2 zeigt ein Systemschaubild einer erfindungsgemässen Heizungsanlage mit einer Kompressor-Wärmepumpe.

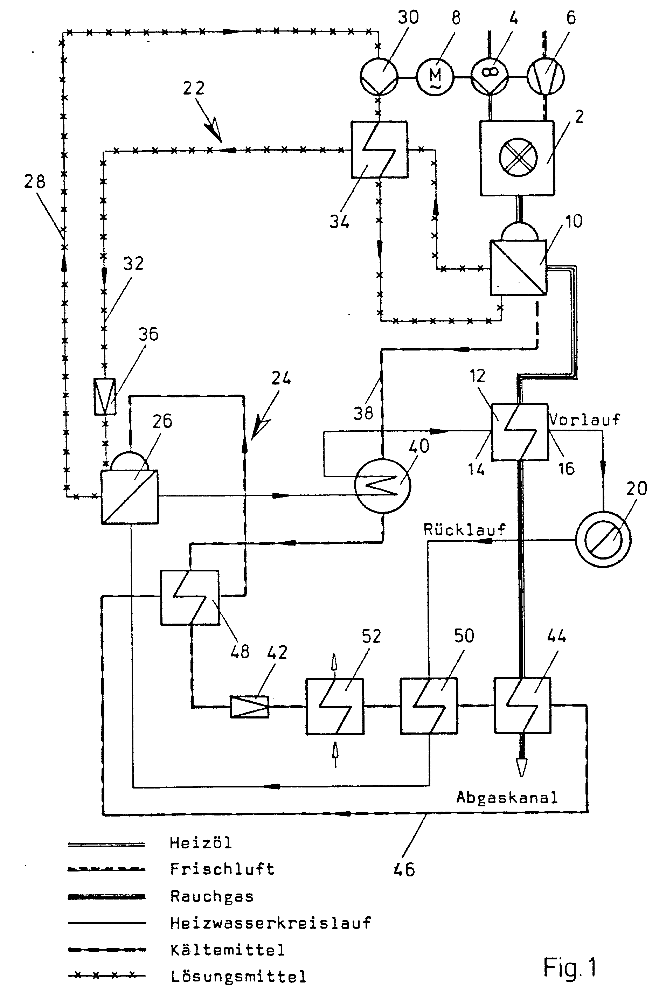

Die Heizungsanlage nach Fig. 1 weist einen Brenner 2 auf, dem über eine Ölpumpe 4 Heizöl und über einen Luftverdichter 6 die zur Verbrennung des Heizöls notwendige Luft zugeführt wird. Die Ölpumpe 4 und der Luftverdichter 6 werden von einem Elektromotor 8 angetrieben. Durch die Brenngase des Brenners 2 wird der Kocher 10 der Absorberwärmepumpe beheizt. Die Brenngase durchlaufen dann den Heizungswärmetauscher 12, der mit einem Anschluss 14 für den Rücklauf und einem Anschluss 16 für den Vorlauf versehen ist. Das im Kesselwärmetauscher 12 aufgeheizte Wasser gelangt über den Vorlauf in die einzelnen Heizkörper 20 des Heizungssystems.

Die Wärmepumpe weist weiter einen Lösungskreis 22 und einen Kältemittelkreis 24 auf sowie einen Absorber 26. Aus dem Absorber wird die reiche Lösung über die Leitung 28 durch eine Pumpe 30 unter Druckerhöhung in den Kocher 10 gefördert, aus dem über eine Leitung 32 die arme Lösung nach einem Wärmeaustausch mit der reichen Lösung in einem Wärmetauscher 34 und Entspannung in einem Drosselventil 36 in den Absorber 26 gelangt.

Das den Kocher 10 in dampfförmigem Zustand verlassende Kältemittel wird über eine Leitung 38 durch einen Wärmetauscher 40 im Rücklauf des Heizungssystems geleitet und durchströmt nach seiner Entspannung im Drosselventil 42 einen Wärmetauscher 44, durch den das Abgas des Heizungskessels hindurch geleitet wird. Das aufgeheizte Kältemittel gelangt dann über eine Leitung 46 über einen Wärmetauscher 48 in den Absorber 26. Im Wärmetauscher 48 erfolgt ein Wärmeaustausch zwischen dem vorlaufenden und dem in den Absorber rücklaufenden Kältemittel.

Der Heizungsrücklauf wird durch einen Wärmetauscher 50 geleitet, in dem dem Kältemittelkreis Verdampfungswärme entnommen wird. Hinter dem Wärmetauscher 50 wird der Rücklauf durch den Absorber 26 geleitet, aus dem die Absorptionswärme entnommen wird. Von dort führt der Rücklauf über den bereits erwähnten Wärmetauscher 40 in den Rücklaufanschluss 14 des Kesselwärmetauschers 12.

In der Zeichnung ist weiter ein dritter Wärmetauscher 52 dargestellt, der wiederum in wärmetauschender Verbindung mit dem entspannten Kältemittel steht. Der Wärmetauscher 52 ist in bekannter Weise Teil eines Heizkreises mit einem Medium mit niedrigem Temperaturniveau, beispielsweise Teil eines Heizkreises, das Erd- oder Wasserwärme aus stehenden oder fliessenden Gewässern aufnimmt, oder aber auch Teil eines Heizkreises, der durch Umgebungsluft oder mit Abwärme beladener Abluft beheizt wird.

Die Reihenfolge, in der die Wärmetauscher 44, 50 und 52 vom Kältemittel durchströmt werden, sollte so sein, dass die für die Wärmeabgabe zur Verfügung stehenden Temperaturgefälle jeweils in Strömungsrichtung nacheinander grösser werden.

Der Wärmetauscher 44 sollte vorzugsweise so ausgelegt werden, dass die den Kessel normalerweise mit Temperaturen von 200° bis 300°C verlassenden Brenngase etwa auf Umgebungstemperatur, d.h. auf Temperaturen zwischen 10°C und 20°C abgekühlt werden. Bei einer solchen Abkühlung der Rauchgase kondensiert das in diesen enthaltene Wasser an den Wärmetauscherflächen. In diesem Wasser sind die bei der Verbrennung des von Natur aus im Heizöl enthaltenen Schwefels entstehenden Schwefeloxyde zu Schwefelsäuren gelöst. Das schwefelsaure Kondensat kann in einem Auffangbehälter für das Kondenswasser neutralisiert werden, bevor das Kondenswasser in die normalen Abwasserführungen eingeleitet wird. Unter Umständen kann bei einer ausreichenden Basität des Wassers in den Abwasserführungen auf eine Neutralisierung verzichtet werden.

Das aus dem Wärmetauscher 44 mit Raumtemperatur austretende Abgas ist somit weitgehend von die Umwelt belastenden Stoffen gereinigt. Das Abgas kann daher unmittelbar durch Mauerdurchbrüche oder Abgasleitungen, die auch aus Kunststoffrohren bestehen können, ins Freie geleitet werden. Da das abzuleitende Abgas trocken ist, sind Kondensniederschläge in den Abgasleitungen nicht zu befürchten. Bei der beschriebenen Abgaskühlung kann auf Schornsteine ganz verzichtet werden. Damit können Heizkessel aber praktisch an beliebigen Stellen ohne Rücksicht auf vorhandene Kaminzüge aufgestellt werden. Neben der angestrebten Umweltentlastung hat das erfindungsgemässe System den Vorteil, dass der Wärmeinhalt des normalerweise durch den Schornstein abströmenden Abgases nahezu vollständig zurückgewonnen werden kann, wodurch die Wärmebilanz des Heizungssystems verbessert wird. Die dadurch zusätzlich gewonnene Energie kann in der Grössenordnung von 15 und mehr % verglichen mit heutigen Heizungssystemen angenommen werden. Die einzelnen Bestandteile des vorstehend beschriebenen Systems können in den Heizkessel integriert bzw. unmittelbar am Heizkessel angebaut werden. Dabei können die Wärmetauscher vom Wasser der Heizung umspült eingebaut werden, so dass auch ohne kostspielige Isolierungen dem System schadende Energieverluste vermieden werden. Ein so ausgebildeter Heizkessel brauchte wie bei jetzigen Heizkesseln nur mit Anschlüssen für den Vor- und Rücklauf versehen sein, gegebenenfalls Anschlüssen für den betreffenden Heizkreis an den Wärmetauscher 52.

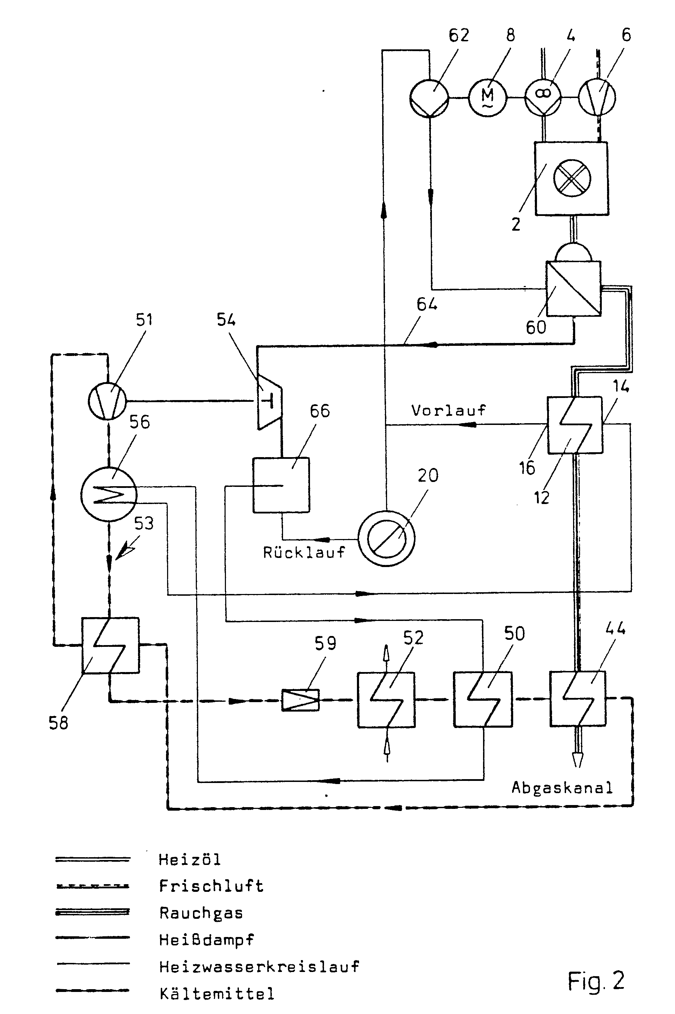

Die in Fig. 2 dargestellte Heizungsanlage arbeitet mit einer Kompressor-Wärmpumpe. Solche Teile der Heizungsanlage, die mit Teilen der Heizungsanlage nach Fig. 1 identisch sind, sind hier mit den gleichen Bezugszeichen versehen.

Der Verdichter 51 des Kältemittelkreises 53 ist mit einem Antrieb 54 versehen. Das verdichtete Kältemittel wird in einem im Rücklauf des Heizungssystems 20 liegenden Wärmetauscher 56 verflüssigt und nach Wärmetausch mit dem rücklaufenden Kältemittel in einem Wärmetauscher 58 in einem Drosselventil 59 entspannt. Das entspannte Kühlmittel durchströmt dann den Wärmetauscher 52 eines Niedrigtemperaturheizkreises, sofern ein solcher vorhanden ist. Dann durchströmt das Kühlmittel einen im Rücklauf des Heizungssystems liegenden Wärmetauscher 50 und anschliessend den von den Abgasen durchströmten Wärmetauscher 44.

Erfindungsgemäss ist ein von den Brenngasen des Brenners 2 beaufschlagter Dampferzeuger 60 vorgesehen. Dieser Dampferzeuger wird über eine druckerhöhende Pumpe 62, die vom Motor 8 mit angetrieben wird, mit Wasser aus dem Vorlauf des Heizungssystems gespeist. Der Dampferzeuger kann beispielsweise eine Rohrwendel sein, die die Flamme des Brenners umgibt.

Der Antrieb 54 ist dampfbetrieben und kann beispielsweise als Dampfturbine ausgebildet sein. Dieser Dampfturbine wird der Dampf aus dem Dampferzeuger 60 über die Dampfleitung 64 zugeleitet. Der Abdampf der Turbine 54 wird in einen Kondensator 66 eingeleitet, in dem der Dampf verflüssigt und in den Rücklauf des Heizungssystems eingespeist wird. Statt einer Dampfturbine kann auch ein dampfbetriebener Kolbenmotor vorgesehen werden.

Die Bereitstellung der im Kältemittelkreis benötigten Verdichterarbeit über einen dampfbetriebenen Antrieb hat gegenüber einem Elektromotor als Antrieb den Vorteil, dass die Antriebsenergie wirtschaftlicher als elektrischer Strom zur Verfügung gestellt werden kann. Sämtliche beim Dampfantrieb mit unmittelbarer Dampferzeugung im Heizkessel erzeugte Energie hat den Vorteil, dass alle Wärmeverluste des Antriebes positiv in die Wärmebilanz der Heizungsanlage eingehen.

Die Verwendung eines dampfbetriebenen Antriebs kann insbesondere für Heizungsanlagen mit höherer Leistung eingesetzt werden. Für kleinere Heizungsanlagen kann es unter Umständen günstiger sein, den Kältemittelverdichter in üblicher Weise mit einem Elektromotor anzutreiben. Hierbei werden die Vorteile, die durch die Abkühlung des Rauchgases in der oben beschriebenen Weise nicht berührt.

Zusammen mit dem im Abgas enthaltenen Wasserdampf und Schwefeldioxyd wird sich an den Wärmetauscherflächen des Wärmetauschers 44 auch der im Abgas enthaltene Russ niederschlagen. Um Verschmutzungen durch Russanlagerungen zu vermeiden, sollte der Brenner optimal auf eine möglichst kleine Russzahl eingestellt werden. Besonders vorteilhaft sind blaubrennende Ölbrenner, d.h. Ölbrenner, bei denen das Öl im Brenner vergast wird und die daher mit einer gasflammenähnlichen Flamme russfrei brennen.

Die erfindungsgemässe Heizungsanlage ist auch dann vorteilhaft, wenn in den Brennstoffen keine umweltschädlichen Bestandteile enthalten sind, beispielsweise bei Verwendung von Gas als Brennstoff. In diesem Fall wird bereits ein wesentlicher Fortschritt gegenüber bekannten Heizanlagen durch die vollständige Rückgewinnung der Abgaswärme erreicht, wobei auch hier die Heizungsanlage dann nicht schornsteingebunden wäre.

**Ansprüche**

1. Heizungsanlage mit einem Brenner für flüssige oder gasförmige Brennstoffe in Kombination mit einer Wärmepumpe, deren abzugebende Wärme über Wärmetauscher dem Rücklauf der Heizung zugeführt wird, und bei dem das Kältemittel in einem Wärmetauscher durch das Abgas des Brenners aufgeheizt wird, dadurch gekennzeichnet, dass der Wärmetauscher (44) so ausgelegt ist, dass das Abgas bis auf Umgebungstemperatur abgekühlt wird, und dass Mittel zum Auffangen des sich dabei auf den Wärmeaustauscherflächen niederschlagenden Kondensats vorgesehen sind.

2. Heizungsanlage nach Anspruch 1, dadurch gekennzeichnet, dass an das Kältemittel zusätzlich in einem Wärmetauscher (52) aus einem Heizkreis mit einem Medium mit niedrigem Temperaturniveau Wärme abgegeben wird.

3. Heizungsanlage nach einem der vorhergehenden Ansprüche, dadurch gekennzeichnet, dass die Wärmepumpe als an sich bekannte Absorberwärmepumpe ausgebildet ist, deren Absorber (26) mit Kondensator (40) im Rücklauf der Heizung (20) angeordnet ist und deren Kocher (10) vom Heizungsbrenner (2) beheizt wird.

4. Heizungsanlage nach Anspruch 1 oder 2, dadurch gekennzeichnet, dass die Wärmepumpe in an sich bekannter Weise mit einem motorisch angetriebenen Verdichter (51) versehen ist.

5. Heizungsanlage nach Anspruch 4, dadurch gekennzeichnet, dass als Antrieb des Verdichters (51) ein dampfbetriebener Antrieb (54) vorgesehen ist, dessen Abdampf in den Rücklauf der Heizung eingeleitet wird.

6. Heizungsanlage nach Anspruch 4, dadurch gekennzeichnet, dass als Dampferzeuger ein durch die Brenngase des Brenners beaufschlagter Verdampfer (60) vorgesehen ist, in den Wasser aus dem Vorlauf des Heizkessels eingespeist wird.

7. Heizungsanlage nach Anspruch 5 oder 6, dadurch gekennzeichnet, dass als Antrieb für den Verdichter (51) eine Dampfturbine (54) vorgesehen ist.

8. Heizungsanlage nach Anspruch 5 oder 6, dadurch gekennzeichnet, dass der Antrieb des Verdichters (51) als Kolbendampfmaschine ausgebildet ist.

**Claims**

1. A heating installation comprising a heater having liquid or gas burner combined with a heat pump, and the heat to be delivered by said heat pump being supplied to the return flow of the heating medium by heat exchangers, and the cooling medium being arranged to be heated by the waste gases of the burner in the heat exchanger, characterized in that the heat exchanger (44) is arranged to cool the waste gases to room temperature and condensate thereby produced on the heat exchanger surfaces is collected in collecting means.

2. A heating installation according to Claim 1, characterized in that in a heat exchanger (52) the cooling medium is additionally supplied with heat from a heating circuit by a medium at a low temperature.

3. A heating installation according to one of the preceding claims, characterized in that the heat pump is an absorber heat pump as known per se, the absorber (26) of which is associated with a condenser (40) in the return flow of the heating medium (20) and the boiler (10) of which is heated by the burner (2).

4. A heating installation according to Claim 1 or 2, characterized in that the heat pump includes in a way as known per se a motor driven compressor (51).

5. A heating installation according to Claim 4, characterized in that the drive of the compressor (51) is powered by a steam supply (54), the exhaust steam of which is led to the return flow of the heating medium.

6. A heating installation according to Claim 4, characterized in that an evaporator (60) heated by the combustible gases of the burner provides the steam, water from the forward flow of the heating boiler being fed to the evaporator.

7. A heating installation according to Claim 5 or 6, characterized in that the drive of the compressor (51) is a steam turbine (54).

8. A heating installation according to Claim 5 or 6, characterized in that the drive of the compressor (51) is a reciprocating steam engine.

**Revendications**

1. Installation de chauffage comportant un brûleur pour combustibles liquides ou gazeux en combinaison avec une pompe de chaleur dont la chaleur à céder est transmise par des échangeurs thermiques au retour du chauffage, le frigorigène étant chauffé dans un échangeur thermique par le gaz de combustion du brûleur, caractérisée par le fait que l'échangeur thermique (44) est conçu de telle sorte que le gaz de combustion se refroidit jusqu'à la température ambiante et que des moyens sont prévus pour recueillir le condensat qui se dépose alors sur les surfaces de l'échangeur thermique.

2. Installation de chauffage selon la revendication 1, caractérisée par le fait qu'au frigorigène est transmise en outre, dans un échangeur thermique (52), de la chaleur provenant d'un circuit de chauffage contenant un fluide à bas niveau de température.

3. Installation de chauffage selon l'une des revendications précédentes, caractérisée par le fait que la pompe de chaleur est sous la forme d'une pompe de chaleur à absorbeur, en elle-même connue, dont l'absorbeur (26) est placé avec le condenseur (40) dans le retour du chauffage (20) et dont le bouilleur (10) est chauffé par le brûleur de chauffage.

4. Installation de chauffage selon l'une des revendications 1 et 2, caractérisée par le fait que la pompe de chaleur est munie, de manière connue en soi, d'un compresseur (51) entraîné par moteur.

5. Installation de chauffage selon la revendication 4, caractérisée par le fait que l'entraînement prévu pour le compresseur (51) est un entraînement fonctionnant à la vapeur (54) dont la vapeur d'échappement est introduite dans le retour du chaffauge.

6. Installation de chauffage selon la revendication 4, caractérisée par le fait que le générateur de vapeur prévu est un évaporateur (60) subissant l'action des gaz de combustion du brûleur et dans lequel on introduit de l'eau venant du conduit d'alimentation de la chaudière de chauffage.

7. Installation selon l'une des revendications 5 et 6, caractérisée par le fait que l'entraînement prévu pour le compresseur (51) est une turbine à vapeur (54).

8. Installation de chauffage selon l'une des revendications 5 et 6, caractérisée par le fait que l'entraînement du compresseur (51) est sous forme de machine à vapeur à piston.

Fig. 1

Heizöl

Frischluft

Rauchgas

Heizwasserkreislauf

Kältemittel

Lösungsmittel

Vorlauf

Rücklauf

Abgaskanal

Fig. 2

| | Heizöl |
| | Frischluft |
| | Rauchgas |
| | Heißdampf |
| | Heizwasserkreislauf |
| | Kältemittel |